# EUROPÄISCHE PATENTSCHRIFT

(11) **EP 1 653 128 B1**
(45) Veröffentlichungstag und Bekanntmachung des Hinweises auf die Patenterteilung: **15.12.2010**
(21) Anmeldenummer: 05022739.6
(22) Anmeldetag: 19.10.2005
(51) Int. Cl.: F16H 63/20, F16H 63/36, F16H 61/30, F16H 61/32, F16H 61/688, F16H 59/68

(54) **Schalteinrichtung**
Shifting device
Dispositif de changement de vitesse

(30) Priorität: 26.10.2004 DE 102004052804
(43) Veröffentlichungstag der Anmeldung: 03.05.2006
(73) Patentinhaber: GETRAG Getriebe- und Zahnradfabrik Hermann Hagenmeyer GmbH & Cie KG, 74199 Untergruppenbach (DE)
(72) Erfinder: Petrzik, Gunther, 78112 St. Georgen (DE)
(74) Vertreter: Steil, Christian

(56) Entgegenhaltungen:
- EP-A- 1 245 872
- EP-A- 1 298 363
- EP-A- 1 619 422
- WO-A-2004/090388
- DE-A1- 10 143 324
- DE-C1- 10 205 689
- FR-A- 2 812 706
- FR-A- 2 814 524
- FR-A- 2 829 552
- JP-A- 61 241 554

## Beschreibung

Die vorliegende Erfindung betrifft eine Schalteinrichtung für ein automatisiertes Stufengetriebe, das wenigstens sechs Gangstufen aufweist, insbesondere ein Kraftfahrzeuggetriebe.

Insbesondere betrifft die vorliegende Erfindung eine Schalteinrichtung für solche automatisierten Stufengetriebe, bei denen eine formschlüssige Kraftübertragung eingerichtet wird, indem ein Schaltglied wie eine Schaltgabel oder Schaltwippe in einer axialen Richtung entlang einer Getriebewelle bewegt wird. Dies trifft insbesondere zu bei Stufengetrieben vom Vorgelegetyp, bei dem Schaltkupplungen (bspw. in Form von Synchronisierungen) vorgesehen sind, um ein Losrad mit der Getriebewelle zu verbinden bzw. den Formschluss zu trennen.

Bei derartigen automatisierten Stufengetrieben unterscheidet man zwischen den sogenannten ASG-Getrieben und den sogenannten Doppelkupplungsgetrieben. ASG-Getriebe sind aufgebaut wie herkömmliche Handschaltgetriebe, wobei die Betätigung der Schaltkupplungen automatisiert erfolgt. Moderne ASG-Getriebe weisen zwei Schaltaktuatoren auf, um das Auslegen eines Quellganges und das Einlegen eines Zielganges zeitlich fast überschneidend durchführen zu können. Gleiches gilt bei den Doppelkupplungsgetrieben, bei denen das überschneidende Ein- und Auslegen von Gängen ein Kernmerkmal darstellt.

Als Schaltaktuatoren eignen sich hydraulische Aktuatoren und elektrische, insbesondere elektromotorische, Aktuatoren. Bei hydraulischen Aktuatoren ist die bevorzugte Schaltrichtung eine Längsbewegung. Bei elektromotorischen Aktuatoren ist die bevorzugte Bewegungsrichtung eine Drehbewegung.

Elektromotorische Aktuatoren werden aus dem oben genannten Grund häufig in Kombination mit Schaltwalzen verwendet. Diese haben den Nachteil einer rein sequenziellen Betätigung. Es sind auch Systeme mit zwei Schaltwalzen bekannt, die von zwei separaten Elektromotoren angetrieben werden, um überschneidende Gangwechsel zu realisieren. Nachteilig bei solchen Schaltwalzen ist jedoch auch, dass der Schaltweg in der Regel überwacht werden muss. Da die Schaltspuren an den Schaltwalzen durchgehend sind, können keine Endlagen (Anschläge) zur Dynamikverbesserung genutzt werden. Daher sind die Schaltvorgänge mit Schaltwalzen tendenziell langsam.

Ein anderer Weg zur Betätigung von einem ASG-Getriebe mit einer Mehrzahl von Gangstufen besteht darin, für jeweils ein Schaltkupplungspaket (bestehend in der Regel aus zwei Schaltkupplungen) eine separate Schaltstange vorzusehen. Für jede der Schaltstangen ist dann ein eigener Aktuator vorgesehen, in der Regel ein doppelt wirkender Hydraulikaktuator. Entsprechend hierzu sind eine gleiche Anzahl von Magnetventilen zur Steuerung der Hydraulikaktuatoren vorzusehen. Ein solches System ist bspw. bekannt aus dem Getriebe des BMW M5, Modelljahr 2005. Bei diesem System ist eine sehr hohe Dynamik erzielbar. Die Überwachung der Position ist jedoch für die Funktionssicherheit notwendig.

Auch ist es bekannt, mehrere Schaltkupplungspakete mittels einer Schaltwelle zu betätigen. Die Schaltwelle weist dabei in der Regel Schaltfinger auf, die je nach Wählstellung (in der Regel je nach Drehstellung) in unterschiedliche Mitnehmer von Schaltkupplungspaketen eingreifen. Die Schaltrichtung ist häufig die Längsrichtung der Schaltwelle. Bei diesem System, das bspw. aus der DE 196 15 267 C1 bekannt ist, sind nur wenige Aktuatoren notwendig. In dem genannten System ist für Schaltbewegungen ein einzelner, doppelt wirkender Hydraulikzylinder vorgesehen. Für Wählbewegungen ist ein einfach wirkender Hydraulikzylinder vorgesehen, der gegen eine Federkraft arbeitet.

Um ein gleichzeitiges Einlegen von zwei Gängen zu vermeiden, ist bei der Schaltanordnung der DE 196 15 267 C1 eine mechanische Verriegelungseinrichtung vorgesehen.

Bei automatisierten Stufengetrieben mit sechs und mehr Gängen ist bei dieser bekannten Schaltanordnung der Wählweg exakt zu steuern. Ferner sind keine hohen Schaltgeschwindigkeiten erzielbar, da insbesondere für Wählbewegungen bei mittleren Gangstufen keine Endstellungen (Anschläge) genutzt werden können. Ferner erfolgt das Wechseln von Gangstufen immer rein sequenziell, da zunächst eine Gangstufe auszulegen ist und über die Neutralstellung eine weitere Gangstufe einzulegen ist. Die genannte Schaltanordnung eignet sich daher nicht für Doppelkupplungsgetriebe.

Bei hydraulischen Aktuatoren, die bestimmte Positionen ohne Endlage ansteuern müssen, ist in der Regel eine aufwändige Sensorik notwendig. Gleiches gilt bei elektromotorischen Aktuatoren, wobei die Sensorik dort teilweise in den Motor integriert sein kann.

Aus der DE 103 20 524 ist es bekannt, die Gangstufen einer jeden Getriebegruppe eines Doppelkupplungsgetriebes mittels einer Schaltwelle zu schalten, wobei der zugeordnete Hydraulikzweig für jede Schaltwelle wenigstens ein proportionales Wegeventil als Schaltsteuerventil aufweist und wenigstens einen Wählaktuator für Wählbewegungen der Schaltwelle aufweist. Es ist dort offenbart, dass man eine derartige Anordnung als Doppel-H-Anordnung bezeichnen kann, wobei jeder Getriebegruppe lediglich eine Schaltwelle zugeordnet ist und wobei in der Regel eine axiale Bewegung der Schaltwelle zum Schalten herangezogen wird und ein Verdrehen der Schaltwelle zum Wählen der jeweiligen Schaltkupplungspakete.

Auch ist es dort offenbart, dass der Wählaktuator ein einfach wirkender Hydraulikzylinder sein kann oder sich magnetisch oder elektromechanisch betätigen lässt.

Auch ist es dort als eine Möglichkeit offenbart, für das Vollziehen von Wählbewegungen einen Drehmagnet oder einen Elektromotor vorzusehen.

Die JP-A-61 241 554 wird als nächstliegender Stand der Technik gegenüber unabhängigen Ansprüchen 1 und 9 angesehen. Die EP-A-1 619 422 bildet einen Stand der Technik gemäß Artikel 54(3) EPÜ.

Vor dem obigen Hintergrund ist es die Aufgabe der vorliegenden Erfindung, eine verbesserte Schalteinrichtung für ein automatisiertes Stufengetriebe bzw. eine Verwendung eines elektromagnetischen Aktuators innerhalb einer solchen Schalteinrichtung anzugeben.

Die obige Aufgabe wird gelöst durch eine Schalteinrichtung für ein automatisiertes Stufengetriebe, das wenigstens sechs Gangstufen aufweist, insbesondere ein Kraftfahrzeuggetriebe, mit wenigstens zwei Schaltwellen, denen jeweils drei oder vier der Gangstufen zugeordnet sind, wobei die Schaltwellen ferner jeweils, nach Art eines H-Schemas, in einer Schaltrichtung zum Schalten von zugeordneten Gangstufen und in einer Wählrichtung zum Auswählen von zugeordneten Gangstufen bewegbar sind, wobei wenigstens einer der Schaltwellen eine mechanische Verriegelungseinrichtung zugeordnet ist, die die Gangstufen, die dieser Schaltwelle zugeordnet sind, gegeneinander verriegelt.

Die erfindungsgemäße Schalteinrichtung zeichnet sich dadurch aus, dass für die sechs Gangstufen lediglich zwei Schaltaktuatoren und eine entsprechende Anzahl Magnetventile notwendig sind. Für jede Schaltwelle ergeben sich rein sequenzielle Prozesse, wobei eine hohe Dynamik erzielbar ist, indem insbesondere in Wählrichtung Endlagen (Anschläge) genutzt werden können.

Einer Schaltwelle sind dabei zwei Schaltkupplungspakete zugeordnet, die jeweils zwei Schaltkupplungen beinhalten.

Durch die Maßnahme, eine mechanische Verriegelungseinrichtung vorzusehen, die die Gangstufen der zugeordneten Schaltwelle gegeneinander verriegelt, kann auf einfache Weise eine hohe Funktionssicherheit erzielt werden. Zudem kann auf Grund der Tatsache, dass die Schaltwelle jeweils zwei Schaltkupplungspakete bedienen muss, eine mechanische Verriegelungseinrichtung auf konstruktiv einfache Weise realisiert werden.

Die obige Aufgabe wird somit vollkommen gelöst.

Von besonderem Vorteil ist es, wenn jeder der Schaltwellen eine eigene Verriegelungseinrichtung zugeordnet ist.

Bei dieser Maßnahme lässt sich die Schalteinrichtung insbesondere für Doppelkupplungsgetriebe verwenden. Dabei wird jeder Schaltwelle ein Teilgetriebe des Doppelkupplungsgetriebes zugeordnet. Die Gangstufen jedes Teilgetriebes lassen sich dann mittels der zugeordneten Verriegelungseinrichtung gegeneinander sperren.

Bei einer Verwendung der Schalteinrichtung für ASG-Getriebe ist es ggf. möglich, die Verriegelungseinrichtungen, die den Schaltwellen jeweils zugeordnet sind, wiederum gegeneinander zu verriegeln, um zu verhindern, dass zwei Gänge gleichzeitig eingelegt werden.

Gemäß der Erfindung sind jeder Schaltwelle genau zwei axial verschiebliche Schaltstangen zugeordnet, mit denen die Schaltwelle alternativ koppelbar ist.

Hierbei ist insbesondere vorteilhaft, dass in Wählrichtung nur zwei Betriebsstellungen eingerichtet werden müssen, die beide auf einfache Weise durch Nutzung von Endlagen einrichtbar sind.

Auch eine Verriegelungseinrichtung ist einfach zu realisieren, da lediglich die nicht angewählte Schaltstange gegenüber einer Bewegung in Schaltrichtung verriegelt werden muss.

Dabei ist es von besonderem Vorteil, wenn die Schaltstangen parallel zu der Schaltwelle ausgerichtet sind.

Dies ermöglicht es auf einfache Weise, zur Schaltbetätigung die Schaltwelle mittels eines Linearaktuators zu versetzen.

Erfindungsgemäß sind an jeder Schaltwelle zwei Schaltfinger zum alternativen Koppeln der Schaltwelle mit den Schaltstangen festgelegt.

Hierdurch lässt sich auf konstruktiv einfache Weise eine Kopplung zwischen Schaltwelle und jeweils einer Schaltstange realisieren. Zudem kann durch geeignete Wahl der Länge der Schaltfinger und entsprechender Mitnehmer (bspw. in Form von Ausnehmungen) an den Schaltstangen auf einfache Weise erreicht werden, dass die Schaltwelle die Schaltstangen als Anschläge für die zwei Wählendpositionen benutzt. Bei dieser Ausführungsform ist die Schaltwelle nach der Art einer Wippe ausschließlich zwischen zwei Wählendpositionen hin und her bewegbar, wobei die Schaltwelle in der einen Wählendposition mit der einen Schaltstange und in der anderen Wählendposition mit der anderen Schaltstange in axialer Richtung gekoppelt ist.

Erfindungsgemäß ist die Schaltrichtung die Längsrichtung und die Wählrichtung die Drehrichtung der Schaltwellen.

Wie oben bereits erwähnt, kann auf diese Weise in günstiger Weise ein Linearaktuator zum Schalten von Gangstufen verwendet werden.

Dabei ist es von besonderem Vorteil, wenn jeder Schaltwelle ein Hydraulikaktuator zum Bewegen der Schaltwelle in Schaltrichtung zugeordnet ist.

Ein Hydraulikaktuator lässt sich bekannterweise besonders vorteilhaft als Schaltaktuator verwenden.

Ferner ist es vorteilhaft, wenn jeder Schaltwelle ein Wegsensor zum Erfassen des Schaltweges der Schaltwelle zugeordnet ist.

Dies ermöglicht eine schnelle und sichere Steuerung von Schaltvorgängen.

Gemäß einer weiteren bevorzugten Ausführungsform ist jeder Schaltwelle ein Drehaktuator zum Bewegen der Schaltwelle in Wählrichtung zugeordnet.

Der Drehaktuator kann bspw. als hydraulischer Aktuator ausgebildet sein.

Besonders bevorzugt ist es jedoch, wenn der Drehaktuator als elektromagnetischer Drehaktuator ausgebildet ist.

Ein Drehaktuator ist zum einen besonders kompakt zu realisieren, er erfordert insbesondere nicht Anordnung eines weiteren Hydraulikzylinders in Richtung senkrecht zur Schaltwelle.

Ein elektromagnetischer Drehaktuator ist kostengünstig zu realisieren, insbesondere, wenn er lediglich zwischen zwei Wählendstellungen hin und her bewegt werden muss.

Dabei ist es von besonderem Vorteil, wenn die Schaltwellen jeweils in Wählrichtung vorgespannt sind, so dass der Drehaktuator als einseitig wirkender Drehaktuator ausgebildet sein kann.

Bei einem solchen elektromagnetischen Drehaktuator ist es ferner möglich, durch Überwachen von elektrischen Betriebsgrößen des Drehaktuators auf die jeweilige Wählposition zurückzuschließen.

Dem gemäß wird es als eigene Erfindung angesehen, einen elektromagnetischen Aktuator zum automatisierten Bewegen in Wählrichtung einer Schaltwelle der erfindungsgemäßen Schalteinrichtung zu verwenden, wobei der Wählweg der Schaltwelle aus wenigstens einer elektrischen Betriebsgröße des Aktuators abgeleitet wird.

Bei dieser Ausgestaltung ist kein separater Wählwegsensor erforderlich. Die jeweilige Wählposition lässt sich auf vergleichsweise einfache Weise aus der elektronischen Steuerung der Schalteinrichtung ableiten.

Es versteht sich, dass die erfindungsgemäße Schalteinrichtung insbesondere für automatisierte Stufengetriebe für Personenkraftwagen geeignet ist, insbesondere für Doppelkupplungsgetriebe. Im letzteren Fall ist jeder Schaltwelle ein Teilgetriebe des Doppelkupplungsgetriebes zugeordnet. Die erfindungsgemäße Schalteinrichtung lässt sich jedoch auch auf andere Arten von Kraftfahrzeuggetrieben anwenden, insbesondere auf ASG-Getriebe.

Dabei versteht sich, dass die mittels der Schalteinrichtung angesteuerten Schaltkupplungen zum Ein- und Auslegen von Gangstufen in der Regel alle synchronisiert sind, was jedenfalls für die Vorwärtsgänge gilt.

Auch gilt, dass für die Wählendpositionen zur alternativen oder zusätzlichen Wegerfassung Endlagenschalter vorgesehen sein können. Gleiches gilt für die Endlagen der Schaltstangen in Axialrichtung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Draufsicht auf eine Schalteinrichtung gemäß einer Ausführungsform der vorliegenden Erfindung;
- Fig. 2: eine schematische Schnittansicht entlang der Linie II-II von Fig. 1; und
- Fig. 3: in schematisierter Form die Verriegelungseinrichtungen, die den zwei Schaltwellen der Schalteinrichtung der Fig. 1 zugeordnet sind.

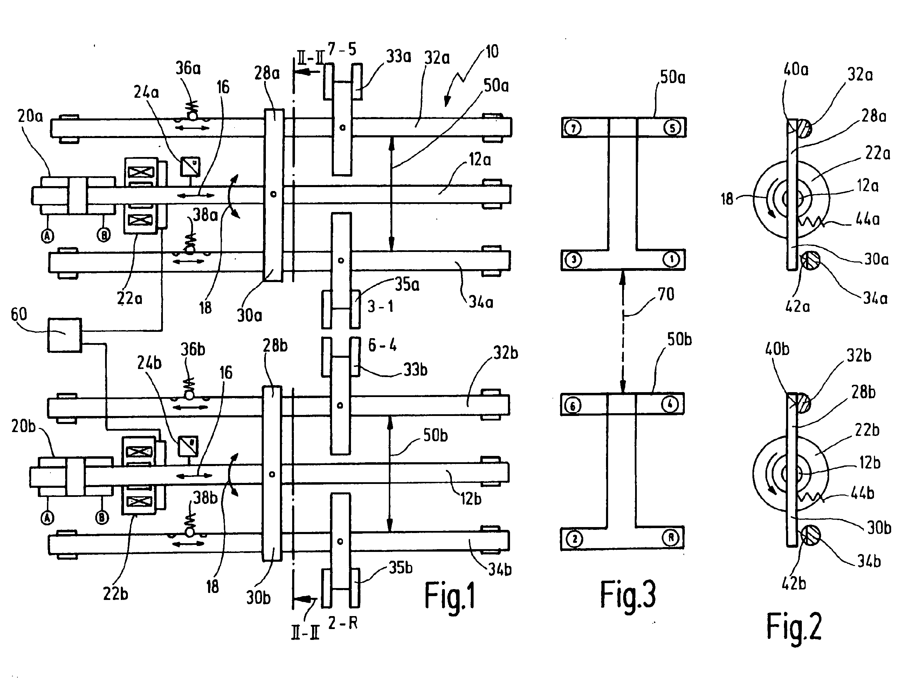

In Fig. 1 ist eine Schalteinrichtung gemäß einer ersten Ausführungsform der vorliegenden Erfindung generell mit 10 bezeichnet.

Die Schalteinrichtung 10 dient zum Schalten von Gangstufen eines Stufengetriebes in Vorgelegebauweise für Personenkraftwagen. Dabei weist das Getriebe sieben Vorwärtsgangstufen 1-7 und eine Rückwärtsgangstufe R auf. Jede der Gangstufen ist in an sich bekannter Weise mittels einer Schaltkupplung, bspw. in Form einer Synchronkupplung, ein- und auslegbar. Dies erfolgt durch Schaltglieder wie Schaltgabeln oder Schaltwippen, die an Schaltmuffen von Schaltkupplungspaketen angreifen. Jedes Schaltkupplungspaket weist dabei in der Regel zwei Schaltkupplungen für zwei axial benachbarte Gangstufen auf.

Das mit der Schalteinrichtung 10 automatisiert betätigte Getriebe ist im vorliegenden Fall ein Doppelkupplungsgetriebe mit zwei Teilgetrieben. Einem Teilgetriebe sind die Vorwärtsgänge 1, 3, 5, 7 zugeordnet. Dem anderen Teilgetriebe sind die Vorwärtsgänge 2, 4, 6 sowie der Rückwärtsgang zugeordnet. Das Wechseln von Gangstufen mit dem Doppelkupplungsgetriebe erfolgt auf überschneidende Art und Weise, wie es im Stand der Technik bekannt ist.

Die Schalteinrichtung 10 weist eine erste Schaltwelle 12a und eine zweite Schaltwelle 12b auf. Die Schaltwellen 12a, 12b verlaufen parallel zueinander. Die erste Schaltwelle 12a ist den Gangstufen 1, 3, 5, 7 des ersten Teilgetriebes zugeordnet. Die zweite Schaltwelle 12b ist den Gangstufen 2, 4, 6, R des zweiten Teilgetriebes zugeordnet.

Schaltbewegungen erfolgen bei der Schalteinrichtung 10 in Längsrichtung, wie es schematisch bei 16 gezeigt ist. Wählbewegungen erfolgen bei der Schalteinrichtung 10 in Drehrichtung, wie es für die zwei Schaltwellen 12a, 12b jeweils schematisch bei 18 gezeigt ist.

Die Schalteinrichtung 10 besteht aus zwei Teilschalteinrichtungen, von denen die eine mit dem Suffix a, und die andere mit dem Suffix b gekennzeichnet ist. Im Folgenden wird aus Gründen einer einfachen Darstellung hinsichtlich des konstruktiven Aufbaus lediglich die Teilschalteinrichtung "a" erläutert, wobei die Beschreibung entsprechend auf die andere Teilschalteinrichtung anwendbar ist.

Der Schaltwelle 12a ist ein Schaltaktuator 20a in Form eines doppelt wirkenden Hydraulikzylinders zugeordnet. Der doppelt wirkende Hydraulikzylinder kann bspw. mittels eines proportionalen Wegeventils angesteuert werden, was jedoch in der Fig. 1 nicht näher dargestellt ist. In der einen Endlage des Schaltaktuators 20a ist entweder die Gangstufe 5 oder die Gangstufe 1 eingelegt. In der anderen Endlage ist entweder die Gangstufe 7 oder die Gangstufe 3 eingelegt.

Der ersten Schaltwelle 12a ist ferner ein Drehaktuator in Form eines elektromagnetischen Wählaktuators 22a zugeordnet.

Der Elektromagnet des Wählaktuators 22a kann schaltend sein oder eine proportionale Kraft-Hub-Kennlinie aufweisen. Eine proportionale Kennlinie erlaubt ein dosiertes Abbremsen vor Anschlägen (geringere Geräuschentwicklung).

Der Wählaktuator 22a dient dazu, durch Verdrehen der Schaltwelle 20a entweder das Schaltkupplungspaket mit den Gängen 7-5 oder das Schaltkupplungspaket mit den Gängen 3-1 anzuwählen. Die Kinematik zwischen Wählaktuator 22a und Schaltwelle 12a sollte eine überlagerte Hubbewegung zulasen.

Ferner ist der ersten Schaltwelle 12a ein Wegsensor 24a zugeordnet, der den Schaltweg der Schaltwelle 12a erfasst.

Für den Wählweg (also die Drehposition der Schaltwelle 12a) ist hingegen kein eigener Sensor vorgesehen. Der Wählweg wird unmittelbar aus einer elektrischen Betriebsgröße des elektromagnetischen Wählaktuators 22a abgeleitet. Dies kann bspw. die Induktivität des elektromagnetischen Wählaktuators 22a sein bzw. mittelbar der zum Ansteuern desselben verwendete elektrische Strom.

An der Schaltwelle 12a ist ein erster Schaltfinger 28a festgelegt, der sich quer in Bezug auf die Längserstreckung der Schaltwelle 12a erstreckt. Ferner ist an der Schaltwelle 12a ein zweiter Schaltfinger 30a festgelegt. Die Schaltfinger 28a, 30a können, wie im dargestellten Beispiel, durch ein einzelnes Bauteil gebildet sein, das an der Schaltwelle 12a festgelegt ist.

Der ersten Schaltwelle 12a ist ferner eine erste Schaltstange 32a zugeordnet, an der eine Schaltgabel 33a zum Betätigen des Schaltkupplungspaketes für die Gangstufen 7, 5 festgelegt ist. Ferner ist der ersten Schaltwelle 12a eine zweite Schaltstange 34a zugeordnet, an der eine zweite Schaltgabel 35a zum Betätigen eines Schaltkupplungspaketes für die Gangstufen 3, 1 festgelegt ist. Die zwei Schaltstangen 32a, 34a liegen parallel zu der Schaltwelle 12a.

Die erste Schaltstange 32a ist in drei axialen Stufen einrastbar, und zwar mittels einer ersten Rastierung 36a. In entsprechender Weise ist die zweite Schaltstange 34a mittels einer zweiten Rastierung 38a in drei Positionen rastierbar.

Von den drei Rastpositionen entspricht eine mittlere Position einer Neutralstellung. Die anderen zwei Rastpositionen entsprechen jeweils einer eingelegten Gangstufe.

Wie es in Fig. 2 gezeigt ist, ist an der ersten Schaltstange 32a eine Radialausnehmung 40a ausgebildet, in die hinein der erste Schaltfinger 28a greifen kann. In entsprechender Weise ist an der zweiten Schaltstange 34a eine zweite radiale Ausnehmung 42a ausgebildet, in die der zweite Schaltfinger 30a eingreifen kann.

Die Schaltstangen 32a, 34a sind ferner in Bezug auf die Schaltwelle 12a und die daran angebrachten Schaltfinger 28a, 30a so angeordnet, dass alternativ entweder der erste Schaltfinger 28a mit der ersten Schaltstange 32a gekoppelt ist oder der zweite Schaltfinger 30a mit der zweiten Schaltstange 34a gekoppelt ist, wie es insbesondere Fig. 2 leicht zu entnehmen ist.

Dabei ist zudem eine Vorspannfeder 44a vorgesehen, die die erste Schaltwelle 12a in einer Wählrichtung vorspannt. In Fig. 2 ist gezeigt, dass die Vorspannfeder 44 an dem zweiten Schaltfinger 30a angreift. Es kann sich bei der Feder 44a jedoch auch um eine Torsionsfeder handeln, die direkt an der Schaltwelle 12a angreift, oder Ähnliches.

In jedem Fall wird durch die Vorspannfeder 44a eine bevorzugte Lage der Schaltwelle 12a in Wählrichtung eingerichtet, und zwar derart, dass jeweils die höheren Gangstufen (für die erste Schaltwelle 12a die Gangstufen 5, 7) in der Vorspannstellung angewählt sind.

Man erkennt in Fig. 2 ferner, dass die Länge der Schaltfinger 28a, 30a in Bezug auf die Lage der Schaltstangen 32a, 34a so gewählt ist, dass die Schaltstangen 32a, 34a gleichzeitig als Anschläge in Wählrichtung 18 dienen. Die Anordnung der Schaltfinger 28a, 30a und der Schaltstangen 32a, 34a in Bezug auf die Schaltwelle 12a ist ferner derart, dass die Schaltwelle 12a zwischen der einen Wählendposition (in der Ausnehmung 40a) und der anderen Wählendposition (in der Ausnehmung 42a) lediglich einen Drehwinkel im Bereich von 0,5 bis 30° dreht, vorzugsweise von 4° bis 12°.

Auf Grund dieses geringen Drehwinkels zwischen den zwei Wählendpositionen kann günstigerweise ein elektromagnetischer Drehaktuator 22a verwendet werden, der nur einen geringen Hub in Drehrichtung vollzieht. Hierdurch kann ein besonders kostengünstiger Drehaktuator implementiert werden.

Der elektromagnetische Wählaktuator 22a wird im Wesentlichen nur in einer Richtung betätigt, nämlich gegen die Kraft der Vorspannfeder 44a. Er kann zudem die Wählposition auf vergleichsweise einfache Weise aus einer elektrischen Betriebsgröße des Wählaktuators 22a abgeleitet werden, bspw. aus dem hier durchfließenden Strom. Da der Wählaktuator 22a bei Betätigung gegen die Kraft der Vorspannfeder 44a so anzieht, dass der zweite Schaltfinger 30a gegen die Ausnehmung 42a der zweiten Schaltstange 34a anschlägt, ergibt sich in der elektrischen Stellgröße (bspw. elektrischer Strom) des Wählaktuators 22a ein Überschwinger ("peak"), wenn diese Wählendposition erreicht ist. Anders ausgedrückt, ergibt sich bei einem Anlage- bzw. Anschlagwechsel ein Knick im Stromverlauf. Hierdurch kann auf einfache Weise die genannte Wählendposition nach der Art eines Anschlagsensors bzw. Endlagensensors abgefragt werden. Ein separater Sensor ist hierfür nicht erforderlich.

Sofern der elektromagnetische Wählaktuator 22a nicht bestromt ist, ist er in der neutralen Schaltstellung auf Grund der Vorspannung der Feder 44 immer in der anderen Wählendlage. Somit ist eine eindeutige Wählpositionserfassung zwischen den zwei Betriebswählpositionen realisierbar.

Ferner ist für die erste Schaltwelle 12a eine Verriegelungseinrichtung 50a vorgesehen, die in Fig. 1 schematisch dargestellt ist.

Die Verriegelungseinrichtung 50a verriegelt die Gangstufen 1, 3, 5, 7, die der ersten Schaltwelle 12a zugeordnet sind, gegeneinander. Dies kann auf Grund der Tatsache, dass der ersten Schaltwelle 12a nur genau zwei Schaltstangen 32a, 34a zugeordnet sind, konstruktiv auf einfache Weise realisiert werden. Im einfachsten Fall sind an den Schaltstangen 32a, 34a jeweils Vorsprünge vorgesehen, zwischen denen ein quer zur Schaltstangenerstreckung verschieblich gelagerter Sperrschieber angeordnet ist. Dieser gewährleistet, dass sich nur eine der zwei Schaltstangen 32a, 34a in einer Schaltposition befindet. Mit anderen Worten dient die Verriegelungseinrichtung dazu, dass dann, wenn eine der zwei Schaltstangen 32a, 34a sich in einer Schaltposition befindet, bei der eine zugeordnete Gangstufe eingelegt ist, die andere Schaltstange nicht aus der Neutralposition herausbewegt werden kann.

Dies ist schematisch auch in Fig. 3 dargestellt. Durch die Verriegelungseinrichtung 50a wird ein einfaches H-Schema für die Schaltwelle 12a eingerichtet. Es kann jeweils nur eine der Gangstufen eingelegt sein, die der ersten Schaltwelle 12a zugeordnet ist.

Bei 60 ist ferner eine Steuereinrichtung gezeigt, die jeweils die beiden Schalt- und Wählaktuatoren 20, 22, der Schalteinrichtung 10 ansteuert. Die Steuereinrichtung 60 ist als elektronische Steuereinrichtung ausgelegt und erzeugt unmittelbar Steuerströme für die elektromagnetischen Wählaktuatoren 22. In Bezug auf die hydraulischen Schaltaktuatoren 20 erzeugt die Steuereinrichtung 60 geeignete Schaltsignale für die Ventile (bspw. proportionale Wegeventile), die den Schaltaktuatoren 20 zugeordnet sind.

Die Schalteinrichtung 10 weist folglich für die eine Getriebegruppe des Doppelkupplungsgetriebes eine erste Verriegelungseinrichtung 50a auf und für das zweite Teilgetriebe eine eigene Verriegelungseinrichtung 50b. Demzufolge kann in jedem Teilgetriebe eine Gangstufe eingelegt sein, wie es bei der Funktionsweise von Doppelkupplungsgetrieben auch erforderlich ist.

Bei Verwendung der Schalteinrichtung 10 für ein ASG-Getriebe, kann es notwendig sein, die zwei Verriegelungseinrichtungen 50a, 50b wiederum gegenseitig zu verriegeln, wie es schematisch bei 70 gezeigt ist. Hierdurch kann dann verhindert werden, dass zwei Gänge gleichzeitig eingelegt werden, was bei ASG-Getrieben generell nicht angezeigt ist.

## Patentansprüche

1. Schalteinrichtung (10) für ein automatisiertes Stufengetriebe, das wenigstens sechs Gangstufen (1-7) aufweist, insbesondere ein Kraftfahrzeuggetriebe, mit wenigstens zwei Schaltwellen (12a, 12b), denen jeweils drei oder vier der Gangstufen zugeordnet sind, wobei die Schaltwellen (12a, 12b) ferner jeweils, nach der Art eines H-Schemas, in einer Längsrichtung (16) zum Schalten von zugeordneten Gangstufen und in einer Drehrichtung (18) zum Auswählen von zugeordneten Gangstufen bewegbar sind, wobei jeder Schaltwelle (12) genau zwei axial verschiebliche Schaltstangen (32, 34) zugeordnet sind, mit denen die Schaltwelle (12) alternativ koppelbar ist
**dadurch gekennzeichnet, dass**
wenigstens einer der Schaltwellen (12a, 12b) eine mechanische Verriegelungseinrichtung (50a, 50b) zugeordnet ist, die die Gangstufen, die dieser Schaltwelle zugeordnet sind, gegeneinander verriegelt, wobei an jeder Schaltwelle (12) zwei Schaltfinger (28, 30) zum alternativen Kuppeln der Schaltwelle (12) mit den Schaltstangen (32, 34) festgelegt sind.

2. Schalteinrichtung nach Anspruch 1, wobei jeder der Schaltwellen (12a, 12b) eine eigene Verriegelungseinrichtung (50a, 50b) zugeordnet ist.

3. Schalteinrichtung nach Anspruch 1 oder 2, wobei die Schaltstangen (32, 34) parallel zu der Schaltwelle (12) ausgerichtet sind.

4. Schalteinrichtung nach einem der Ansprüche 1 - 3, wobei jeder Schaltwelle (12) ein Hydraulikaktuator (20) zum Bewegen der Schaltwelle (12) in Schaltrichtung zugeordnet ist.

5. Schalteinrichtung nach einem der Ansprüche 1 - 4, wobei jeder Schaltwelle (12) ein Wegsensor (24) zum Erfassen des Schaltweges der Schaltwelle zugeordnet ist.

6. Schalteinrichtung nach einem der Ansprüche 1 - 5, wobei jeder Schaltwelle (12) ein Drehaktuator (22) zum Bewegen der Schaltwelle in Wählrichtung zugeordnet ist.

7. Schalteinrichtung nach Anspruch 6, wobei der Drehaktuator (22) als elektromagnetischer Drehaktuator (22) ausgebildet ist.

8. Schalteinrichtung nach einem der Ansprüche 1 - 7, wobei die Schaltwellen (12) jeweils in Wählrichtung (18) vorgespannt sind.

9. Verwendung eines elektromagnetischen Aktuators (22) zum automatisierten Bewegen in Wählrichtung (18) einer Schaltwelle (12) einer Getriebeschalteinrichtung (10) nach einem der Ansprüche 1 - 8, wobei der Wählweg der Schaltwelle (12) aus wenigstens einer elektrischen Betriebsgröße des Aktuators (22) abgeleitet wird.

## Claims

1. Shifting device (10) for an automated step transmission which includes at least six gear steps (1-7), particularly a motor vehicle transmission, comprising at least two shifting shafts (12a, 12b), three or four of the gear steps being assigned to each of the two shifting shafts, wherein the shifting shafts (12a, 12b), further, are movable in the manner of an H-scheme in a longitudinal direction (16) for shifting of associated gear steps and in a rotational direction (18) for selecting associated gear steps, wherein exactly two axially displaceable shifting rods (32, 34) are assigned to each shifting shaft (12), the respective shifting shaft (12) being alternatively couplable with the two shifting rods (32, 34),
**characterized in that**
a mechanical locking device (50a, 50b) being assigned to at least one of the shifting shafts (12a, 12b), which mutually locks the gear steps which are assigned to this shifting shaft, wherein two shifting fingers (28, 30) are attached to each shifting shaft (12), for alternatively coupling the shifting shaft (12) with the shifting rods (32, 34).

2. Shifting device according to claim 1, wherein each of the shifting shafts (12a, 12b) is assigned an own locking device (50a, 50b).

3. Shifting device according to claim 1 or 2, wherein the shifting rods (32, 34) are arranged in parallel to the shifting shaft (12).

4. Shifting device according to any of claims 1 to 3, wherein a hydraulic actuator (20) is assigned to each of the shifting shafts (12), for moving the shifting shafts (12) in the shifting direction.

5. Shifting device according to any of claims 1 to 4, wherein a displacement sensor (24) is assigned to each of the shifting shafts (12), for sensing the shifting displacement of the shifting shaft.

6. Shifting device according to any of claims 1 to 5, wherein a rotational actuator (22) is assigned to each of the shifting shafts (12), for displacing the shifting shaft in selection direction.

7. Shifting device according to claim 6, wherein the rotational actuator (22) is formed as an electromagnetic rotational actuator (22).

8. Shifting device according to any of claims 1 to 7, wherein the shifting shafts (12) are each biased in selection direction (18).

9. Use of an electromagnetic actuator (22) for automatically moving a shifting shaft (12) of a transmission shifting device (10) according to any of claims 1 to 8 in a selection direction, wherein the selection displacement of the shifting shaft (12) is derived from at least one electrical operational parameter of the actuator (22).

## Revendications

1. Dispositif de changement de rapport (10) pour une boîte de vitesses automatisée qui présente au moins six rapports (1-7), notamment une boîte de vitesses de véhicule automobile, comprenant au moins deux arbres de changement de rapport (12a, 12b) auxquels sont respectivement associés trois ou quatre des rapports, les arbres de changement de rapport (12a, 12b) pouvant en outre être respectivement déplacés, à la manière d'un motif en H, dans un sens longitudinal (16) pour engager les rapports associés et dans un sens rotatif (18) pour sélectionner les rapports associés, exactement deux barres de changement de rapport (32, 34) pouvant effectuer une translation axiale étant associées à chaque arbre de changement de rapport (12), avec lesquelles l'arbre de changement de rapport (12) peut être accouplé en alternance,
**caractérisé en ce qu'**
un dispositif de verrouillage mécanique (50a, 50b) est associé à au moins l'un des arbres de changement de rapport (12a, 12b), lequel verrouille mutuellement les rapports qui sont associés à cet arbre de changement de rapport, deux tenons de changement de rapport (28, 30) destinés au couplage alterné de l'arbre de changement de rapport (12) avec les barres de changement de rapport (32, 34) étant fixés sur chaque arbre de changement de rapport (12).

2. Dispositif de changement de rapport selon la revendication 1, dans lequel un dispositif de verrouillage (50a, 50b) propre est associé à chacun des arbres de changement de rapport (12a, 12b).

3. Dispositif de changement de rapport selon la revendication 1 ou 2, dans lequel les barres de changement de rapport (32, 34) sont orientées parallèlement à l'arbre de changement de rapport (12).

4. Dispositif de changement de rapport selon l'une des revendications 1 à 3, dans lequel un actionneur hydraulique (20) destiné à déplacer l'arbre de changement de rapport (12) dans la direction du changement de rapport est associé à chaque arbre de changement de rapport (12).

5. Dispositif de changement de rapport selon l'une des revendications 1 à 4, dans lequel un capteur de course (24) destiné à détecter la course de changement de rapport de l'arbre de changement de rapport est associé à chaque arbre de changement de rapport (12).

6. Dispositif de changement de rapport selon l'une des revendications 1 à 5, dans lequel un actionneur rotatif (22) destiné à déplacer l'arbre de changement de rapport dans la direction de la sélection est associé à chaque arbre de changement de rapport (12).

7. Dispositif de changement de rapport selon la revendication 6, dans lequel l'actionneur rotatif (22) est réalisé sous la forme d'un actionneur rotatif (22) électromagnétique.

8. Dispositif de changement de rapport selon l'une des revendications 1 à 7, dans lequel les arbres de changement de rapport (12) sont respectivement précontraints dans la direction de la sélection (18).

9. Utilisation d'un actionneur électromagnétique (22) pour le déplacement automatisé dans la direction de la sélection (18) d'un arbre de changement de rapport (12) d'un dispositif de changement de rapport de boîte de vitesses (10) selon l'une des revendications 1 à 8, dans laquelle la course de sélection de l'arbre de changement de rapport (12) est dérivée d'au moins une grandeur opérationnelle électrique de l'actionneur (22).
